# EUROPÄISCHE PATENTANMELDUNG

(11) **EP 4 357 070 A1**
(43) Veröffentlichungstag der Anmeldung: **24.04.2024**
(21) Anmeldenummer: 22202849.0
(22) Anmeldetag: 20.10.2022
(51) Int. Cl.: B23Q 1/01, B23K 37/02

(54) **BRÜCKE FÜR EINE LASERBEARBEITUNGSMASCHINE**

(71) Anmelder: Bystronic Laser AG, 3362 Niederönz (CH)
(72) Erfinder: KÄHR, Christian, 5034 Suhr (CH); SCHMUTZ, Peter, 3373 Heimenhausen (CH); BÜRGI, Fabian, 3185 Schmitten (CH)
(74) Vertreter: Fink Numrich Patentanwälte PartmbB

(57) **Zusammenfassung**

Die Erfindung betrifft eine Brücke für eine Laserbearbeitungsmaschine (1), insbesondere eine Laserschneidmaschine, wobei die Brücke (5) einen Träger (6) umfasst, der sich entlang einer ersten Achse (y) erstreckt und eine Aufnahmeseite (7) zum beweglichen Führen einer Laserbearbeitungseinheit (9) entlang der ersten Achse (y) aufweist, und wobei an der Brücke (5) ein oder mehrere Führungsmittel (17) zum beweglichen Führen der Brücke (5) entlang einer zweiten Achse (x), die im Wesentlichen senkrecht zur ersten Achse (y) verläuft, vorgesehen sind. In der erfindungsgemäßen Brücke ist jedes Führungsmittel (17) in einem separaten Auflagebauteil (13) vorgesehen, das lösbar mit dem Träger (6) verbunden ist und eine Auflagefläche (22) aufweist, auf welcher der Träger (6) mit einer Kontaktfläche (29) aufliegt, wobei die Auflagefläche (22) senkrecht zu der Aufnahmeseite (7) verläuft und gegenüber der zweiten Achse (x) in einem Neigungswinkel (a) geneigt ist, so dass sich die Auflagefläche (22) mit zunehmendem Abstand von der Aufnahmeseite (7) der Brücke (5) einer Basis (19) des Auflagebauteils (13) annähert, welche von der Auflagefläche (22) abgewandt ist.

## Beschreibung

Die Erfindung betrifft eine Brücke für eine Laserbearbeitungsmaschine sowie eine entsprechende Laserbearbeitungsmaschine mit einer solchen Brücke.

Aus dem Stand der Technik sind Laserbearbeitungsmaschinen bekannt, bei denen zur Bearbeitung eines Werkstücks mittels eines Laserstrahls eine Laserbearbeitungseinheit über das Werkstück bewegt wird. Hierzu ist die Laserbearbeitungseinheit an einer Brücke befestigt, an der die Laserbearbeitungseinheit entlang einer ersten Achse verfahrbar ist. Ferner ist die Brücke selbst entlang einer zweiten Achse verfahrbar.

Aus der Druckschrift US 2017/0361402 A1 ist eine Brücke für eine Laserschneidmaschine mit einem dreiecksförmigen Profil bekannt, wobei an einer schräg verlaufenden Seite des Profils eine Laserbearbeitungseinheit mit darin vorgesehenem Laserschneidkopf geführt ist.

Die Druckschrift KR 102271355 B1 offenbart eine Brücke für eine Laserbearbeitungsmaschine mit einem dreiecksförmigen Querschnitt, wobei eine Laserbearbeitungseinheit an einer vertikal verlaufenden Kante des Querschnitts vorgesehen ist.

Das Dokument CN 110524264 A zeigt eine Brücke für ein Portal zur maschinellen Bearbeitung, wobei an der Unterseite der Brücke zwei Flächen zur Befestigung von Gleitblöcken vorgesehen sind. An der Brücke können an zwei Anschlussstellen unterschiedliche Antriebe montiert werden.

Aufgabe der Erfindung ist es, eine Brücke für eine Laserbearbeitungsmaschine mit einer gegenüber dem Stand der Technik verbesserten Konstruktion zu schaffen.

Diese Aufgabe wird durch die Brücke gemäß Patentanspruch 1 bzw. die Laserbearbeitungsmaschine gemäß Patentanspruch 14 gelöst. Weiterbildungen der Erfindung sind in den abhängigen Ansprüchen definiert.

Die erfindungsgemäße Brücke ist für eine Laserbearbeitungsmaschine vorgesehen, mit der ein entsprechendes Werkstück über einen Laserstrahl bearbeitet wird. In einer bevorzugten Variante ist die Laserbearbeitungsmaschine eine Laserschneidmaschine, mit der das bearbeitete Werkstück geschnitten wird. Nichtsdestotrotz kann die Laserbearbeitungsmaschine auch für eine andere Art von Bearbeitung, wie z.B. zum Laserschweißen, vorgesehen sein.

Die erfindungsgemäße Brücke umfasst einen Träger, der sich entlang einer ersten Achse erstreckt und eine Aufnahmeseite zum beweglichen Führen einer Laserbearbeitungseinheit entlang der ersten Achse aufweist. An der Brücke sind ein oder mehrere Führungsmittel zum beweglichen Führen der Brücke entlang einer zweiten Achse, die im Wesentlichen senkrecht zur ersten Achse verläuft, vorgesehen. Vorzugsweise sind an der Brücke mehrere Führungsmittel vorgesehen, welche entlang der ersten Achse versetzt zueinander angeordnet sind.

In der erfindungsgemäßen Brücke ist jedes Führungsmittel in einem separaten Auflagebauteil vorgesehen, d.h. für jedes Führungsmittel ist ein eigenes Auflagebauteil vorhanden. Ein jeweiliges Auflagebauteil ist lösbar mit dem Träger verbunden. Hier und im Folgenden ist der Begriff "lösbar" derart zu verstehen, dass das Auflagebauteil und der Träger zerstörungsfrei voneinander getrennt werden können. Ein j eweiliges Auflagebauteil weist eine Auflagefläche auf, auf welcher der Träger mit einer Kontaktfläche aufliegt, wobei die Auflagefläche senkrecht zur Aufnahmeseite verläuft und gegenüber der zweiten Achse in einem Neigungswinkel geneigt ist, so dass sich die Auflagefläche mit zunehmendem Abstand von der Aufnahmeseite der Brücke einer Basis des Auflagebauteils annähert, welche von der Auflagefläche abgewandt ist. Die Basis umfasst dabei eine Basisfläche zur Auflage auf einem Führungsträger eines Maschinenrahmens der Laserbearbeitungsmaschine. Mit anderen Worten erstreckt sich die geneigte Auflagefläche bei der bestimmungsgemäßen Verwendung der Brücke in einer Laserbearbeitungsmaschine mit zunehmendem Abstand von der Aufnahmeseite hin zur Basisfläche bzw. Unterseite des Auflagebauteils.

Erfindungsgemäß wird eine modular aufgebaute Brücke aus Träger und einem oder mehreren Auflagebauteilen geschaffen, die separat gefertigt werden können und erst bei Zusammenbau der Brücke miteinander verbunden werden. Auf diese Weise kann die Herstellung der Brücke stark vereinfacht werden. Insbesondere wird auch die mechanische Bearbeitung von Flächen, die zur präzisen Ausrichtung der Bauteile der Laserbearbeitungsmaschine zueinander erforderlich ist, durch den modularen Aufbau der Brücke vereinfacht. Darüber hinaus wird durch die geneigte Auflagefläche eine Verlagerung des Schwerpunkts der an der Aufnahmeseite vorgesehenen Laserbearbeitungseinheit hin zur Brücke erreicht, wodurch eine kompakte und im Hinblick auf die Gewichtsverteilung optimierte Konstruktion erreicht wird. Insbesondere hängt das Gewicht der Laserbearbeitungseinheit nicht weit über die Aufnahmeseite hinaus.

Wie oben definiert, verläuft in der erfindungsgemäßen Brücke die Auflagefläche eines jeweiligen Auflagebauteils senkrecht zu der Aufnahmeseite des Trägers. Da die Kontaktfläche des Trägers an der Auflagefläche aufliegt, verläuft auch die Kontaktfläche senkrecht zu der Aufnahmeseite des Trägers. Durch diesen rechtwinkligen Aufbau wird die mechanische Bearbeitung der Aufnahmeseite des Trägers vereinfacht, da für die Bearbeitung der Aufnahmeseite einfach aufgebaute Bearbeitungsmaschinen verwendet werden können.

In einer besonders bevorzugten Ausführungsform hat die erfindungsgemäße Brücke zwei Führungsmittel und zwei Auflagebauteile, wobei die Auflagebauteile an Enden des Trägers angeordnet sind, die in Erstreckungsrichtung der ersten Achse entgegengesetzt sind.

Das in einem entsprechenden Auflagebauteil vorgesehene Führungsmittel kann gegebenenfalls mehrere Führungselemente umfassen, wie z.B. mehrere Führungswagen, die vorzugsweise entlang der zweiten Achse versetzt zueinander im Auflagebauteil vorgesehen sind. Das für ein Auflagebauteil vorgesehene Führungsmittel ist vorzugsweise an der Basis des Auflagebauteils angeordnet, welche von der Auflagefläche abgewandt ist (d.h. auf der Unterseite des Auflagebauteils bei bestimmungsgemäßer Verwendung der Brücke in einer Laserbearbeitungsmaschine).

In einer weiteren bevorzugten Ausführungsform sind in der Auflagefläche des entsprechenden Auflagebauteils und/oder in der Kontaktfläche des Trägers, die auf der Auflagefläche aufliegt, ein oder mehrere geöffnete Bereiche vorgesehen, wodurch eine Gewichtsersparnis erreicht wird.

In einer weiteren bevorzugten Ausgestaltung umfasst ein jeweiliges Auflagebauteil einen gegossenen Körper, insbesondere aus Aluminium, wobei die Auflagefläche vorzugsweise Bestandteil des gegossenen Körpers ist.

In einer weiteren Variante umfasst der Träger einen Körper mit einer Vielzahl von miteinander verbundenen Blechen, wobei die Bleche vorzugsweise Stahlbleche sind.

Alternativ kann der Träger einen Körper aus karbonfaserverstärktem Kunststoff umfassen.

In einer besonders bevorzugten Ausführungsform ist hat der Neigungswinkel einen Wert von 5° bis 35°, vorzugsweise von 10° bis 30° und besonders bevorzugt von 15°. Der Neigungswinkel ist dabei der kleinste Winkel, der im Querschnitt senkrecht zur ersten Achse von der Auflagefläche und der zweiten Achse eingeschlossen ist. Mit den obigen Werten des Neigungswinkels wird zum einen eine ausreichende Verlagerung des Schwerpunkts der Laserbearbeitungseinheit hin zur Brücke und zum anderen ein einfacher Zusammenbau von Träger und Auflagebauteilen gewährleistet.

In einer weiteren besonders bevorzugten Ausführungsform ist ein jeweiliges Auflagebauteil zumindest an seiner Auflagefläche lösbar mit dem Träger verbunden. Hierdurch kann eine zuverlässige Verbindung zwischen Auflagebauteil und Träger erreicht werden.

In einer weiteren bevorzugten Variante ist die lösbare Verbindung eines jeweiligen Auflagebauteils mit dem Träger eine kraftschlüssige und/oder formschlüssige Verbindung, wobei die kraftschlüssige und/oder formschlüssige Verbindung vorzugsweise eine Verbindung über eine oder mehrere Schrauben umfasst.

In einer weiteren bevorzugten Ausführungsform sind die Auflagefläche eines jeweiligen Auflagebauteils und die Kontaktfläche des Trägers mittels einer oder mehrerer Schrauben lösbar miteinander verbunden, wobei sich die Schraube oder die Schrauben jeweils durch übereinander liegende Öffnungen in der Auflagefläche und der Kontaktfläche erstrecken und vorzugsweise im Auflagebauteil verschraubt sind. Hierdurch wird ein sehr guter Halt des Trägers an dem Auflagebauteil erreicht.

In einer bevorzugten Variante der soeben beschriebenen Ausführungsform umfassen die Schraube oder die Schrauben zumindest eine Schraube mit einem durchgehenden Gewindeschaft zur kraftschlüssigen Verbindung von Auflagefläche und Kontaktfläche. Alternativ oder zusätzlich umfassen die Schraube oder die Schrauben zumindest eine Passschraube mit einem zylindrischen Schaftabschnitt zur Fixierung der Position des Trägers relativ zu dem jeweiligen Auflagebauteil. Durch die Verwendung von Passschrauben kann eine exakte Positionierung des Trägers relativ zum Auflagebauteil sichergestellt werden. Die Passschrauben haben dabei die Hauptfunktion einer formschlüssigen Verbindung zwischen Träger und Auflagebauteil.

In einer bevorzugten Variante sind wenigstens zwei der mehreren Passschrauben in Erstreckungsrichtung der ersten Achse und/oder in Erstreckungsrichtung der zweiten Achse versetzt zueinander angeordnet. Auf diese Weise wird eine Fixierung der Position des Trägers am Auflagebauteil in mehrere Raumrichtungen erreicht.

In einer weiteren, besonders bevorzugten Ausführungsform weist der Träger für ein jeweiliges Auflagebauteil ein oder mehrere Stützelemente auf, welche sich senkrecht zur ersten Achse erstrecken. Ein jeweiliges Stützelement ist kraftschlüssig und/oder formschlüssig, vorzugsweise mittels einer oder mehrerer Schrauben, mit dem jeweiligen Auflagebauteil, vorzugsweise an einer sich senkrecht zur ersten Achse erstreckenden Seitenfläche des Auflagebauteils, verbunden. In einer bevorzugten Ausführungsform ist ein jeweiliges Stützelement eine Platte. Mittels der Stützelemente wird die Verbindung zwischen Träger und Auflagebauteil verbessert. Insbesondere können die Stützelemente senkrecht zur Auflagefläche wirkende Kräfte aufnehmen.

In einer weiteren bevorzugten Ausführungsform sind für ein jeweiliges Auflagebauteil zwei Stützelemente vorgesehen, die in Erstreckungsrichtung der ersten Achse versetzt zueinander angeordnet sind, wobei das jeweilige Auflagebauteil zwischen den beiden Stützelementen angeordnet ist. Hierdurch wird die Positionierung des Trägers am Auflagebauteil bei Zusammenbau der Brücke erleichtert. Ferner wird die Verbindung zwischen Auflagebauteil und Träger verbessert.

In einer weiteren bevorzugten Variante ist an einer der Aufnahmeseite abgewandten Seite des Trägers ein vorstehender Abschnitt mit einem in Richtung der ersten Achse verlaufenden Führungsabschnitt zur Aufnahme von einer oder mehreren Versorgungskomponenten vorgesehen, insbesondere zur Aufnahme einer Energiekette. In der Energiekette verlaufen Leitungen zur Stromversorgung und Steuerung der Laserbearbeitungseinheit und/oder ein Faserkabel zur Zufuhr von Laserlicht zur Laserbearbeitungseinheit. Diese Ausführungsform ermöglicht eine kompakte Anordnung von Anbauteilen an der Brücke.

In einer bevorzugten Ausgestaltung der soeben beschriebenen Ausführungsform ist zumindest eine Führungsfläche des Führungsabschnitts in einem Winkel, welcher einen Wert von 5° bis 35°, vorzugsweise von 10° bis 30° und besonders bevorzugt von 15° hat, gegenüber der zweiten Achse geneigt, wobei der Winkel vorzugsweise den gleichen Wert aufweist wie der Neigungswinkel der Auflagefläche gegenüber der zweiten Achse. Mit dieser Ausführungsform wird eine zuverlässige Führung der Versorgungskomponenten am Führungsabschnitt erreicht.

In einer weiteren bevorzugten Ausgestaltung umfasst das Auflagebauteil oder zumindest eines der Auflagebauteile eine Aufnahme für eine Antriebseinheit zum Bewegen der Brücke entlang der zweiten Achse. Die Antriebseinheit kann somit kompakt in der Brücke integriert werden.

Neben der oben beschriebenen Brücke betrifft die Erfindung eine Laserbearbeitungsmaschine, insbesondere eine Laserschneidmaschine, mit einer Laserbearbeitungseinheit und einer erfindungsgemäßen Brücke. In einer bevorzugten Ausgestaltung kann die Laserbearbeitungsmaschine eine oder mehrere bevorzugte Varianten der erfindungsgemäßen Brücke enthalten.

Ausführungsbeispiele der Erfindung werden nachfolgend anhand der beigefügten Figuren detailliert beschrieben.

Es zeigen:
- Fig. 1 und Fig. 2: perspektivische Ansichten einer Laserbearbeitungsmaschine mit einer Ausführungsform einer erfindungsgemäßen Brücke;
- Fig. 3: eine Seitenansicht der Brücke aus Fig. 1 bzw. Fig. 2;
- Fig. 4: eine Detailansicht der Brücke aus Fig. 2; und
- Fig. 5: die Detailansicht gemäß Fig. 4 unter Weglassung eines Stützelements.

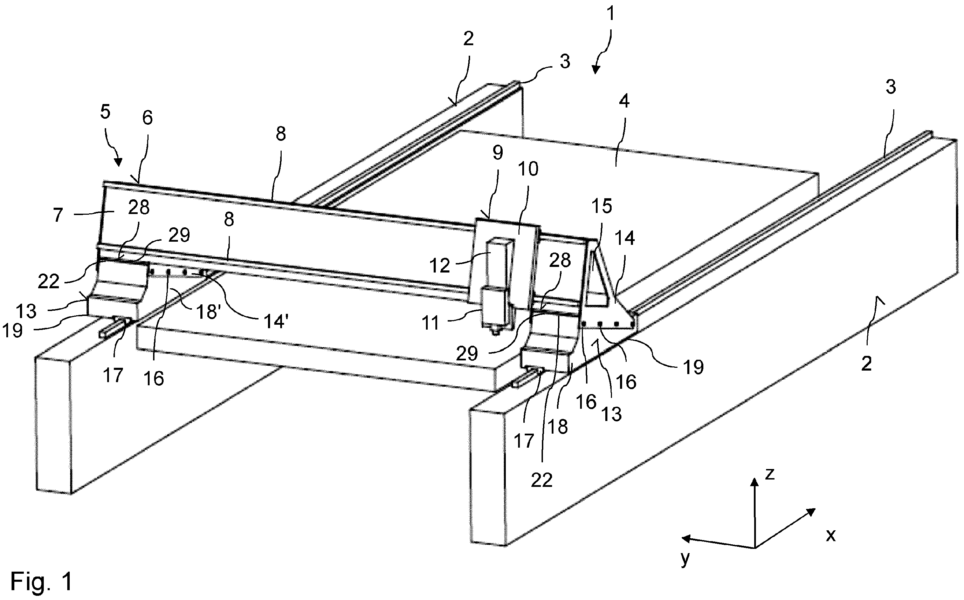

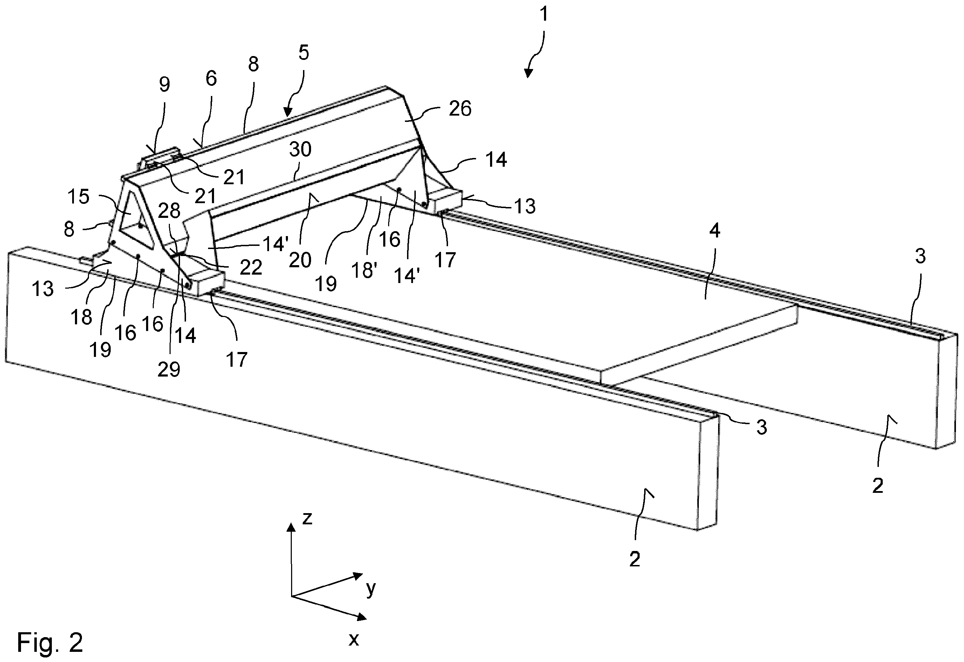

Fig. 1 zeigt in perspektivischer Darstellung von vorne eine Laserbearbeitungsmaschine 1 in der Form einer Laserschneidmaschine, welche eine Ausführungsform einer erfindungsgemäßen Brücke enthält. In Fig. 1 und auch den weiteren Figuren 2 bis 5 ist ein kartesisches Koordinatensystem wiedergegeben, welches die Ausrichtung der Laserbearbeitungsmaschine 1 wiedergibt. Die x-Achse des Koordinatensystems entspricht der Längserstreckung der Laserbearbeitungsmaschine 1, wobei der Laserbearbeitungsmaschine ein zu bearbeitendes Werkstück in x-Richtung zugeführt wird. Die y-Achse entspricht der Achse, entlang welcher sich die nachfolgend erläuterte Brücke 5 der Laserbearbeitungsmaschine 1 erstreckt. Die z-Achse ist die Höhenachse bzw. die vertikale Achse, wobei die z-Richtung die Höhenrichtung von unten nach oben ist.

Die Laserbearbeitungsmaschine 1 umfasst ein Maschinenbett, das zwei Führungsträger 2 mit darauf befindlichen Führungsschienen 3 sowie einen Auflagetisch 4 umfasst. Auf dem Auflagetisch 4 liegt das zu bearbeitende Werkstück auf, bei dem es sich vorzugsweise um ein metallisches Werkstück und insbesondere eine Metallblech handelt. Aus dem Werkstück werden vorbestimmte Konturen mittels einer Laserbearbeitungseinheit 9 ausgeschnitten. Die Laserbearbeitungseinheit 9 umfasst einen verfahrbaren Wagen 10, an dem ein Bearbeitungskopf 11 in der Form eines Laserschneidkopfs vorgesehen ist. Der Bearbeitungskopf 11 ist relativ zu dem verfahrbaren Wagen 10 mit einer Aktorik 12 in vertikaler Richtung bewegbar. Im Betrieb des Bearbeitungskopfs 11 tritt aus diesem ein Laserstrahl nach unten aus. Dieser Laserstrahl zerschneidet das auf dem Auflagetisch 4 befindliche Werkstück.

Der verfahrbare Wagen 10 ist entlang der dargestellten Brücke 5 und damit entlang der y-Achse mittels einer nicht dargestellten Aktorik bewegbar. Über diese Bewegung wird der Laserstrahl bei der Bearbeitung des Werkstücks in y-Richtung verfahren. Die Brücke 5 ist an ihren in y-Richtung entgegengesetzten Enden in den Führungsschienen 3 geführt und kann entlang der x-Achse mittels einer nicht dargestellten Antriebseinheit verfahren werden. Hierdurch kann der Laserstrahl bei der Bearbeitung des Werkstücks in x-Richtung bewegt werden.

Ein erfindungswesentliches Merkmal der dargestellten Brücke 5 besteht darin, dass diese modular aufgebaut ist und sich aus einem Träger 6 sowie zwei Auflagebauteilen 13 zusammensetzt. Der Träger 6 erstreckt sich zwischen den beiden Führungsträgern 2 über den Auflagetisch 4 hinweg und liegt an seinen in y-Richtung entgegengesetzten Enden jeweils auf einer Auflagefläche 22 eines entsprechenden Auflagebauteils 13 auf. Die Auflagefläche 22 ist gegenüber der x-Achse schräg nach unten geneigt. Das Auflagebauteil 13 umfasst in der hier beschriebenen Ausführungsform einen gegossenen Körper, an dem auch die Auflagefläche 22 ausgebildet ist. Demgegenüber ist der Träger 6 ein Kasten aus einer Vielzahl von über Schweiß- und Schraubverbindungen miteinander verbundenen Blechen. Innerhalb des Kastens sind (nicht gezeigte) Verstärkungsrippen vorgesehen, wodurch die Stabilität des Trägers 6 erhöht wird.

Der Träger 6 hat eine Aufnahmeseite 7, die in einem rechten Winkel zur Auflagefläche 22 verläuft. Folglich ist der Träger 6 gegenüber der z-Achse um den gleichen Winkel geneigt ist wie die Auflagefläche 22 gegenüber der x-Achse. Der verfahrbare Wagen 10 wird an der Aufnahmeseite 7 gehalten und ist dort in zwei Führungsschienen 8 entlang der y-Achse geführt. Durch die Neigung der Aufnahmeseite 7 wird der Schwerpunkt der Laserbearbeitungseinheit 9 hin zum Träger 6 verlagert und es wird ein kompakter Aufbau des Trägers 6 mit daran vorgesehener Laserbearbeitungseinheit 10 erreicht.

Jedes Auflagebauteil 13 hat auf seiner Basis bzw. Unterseite 19 ein Führungsmittel 17, um das entsprechende Auflagebauteil entlang einer der Führungsschienen 3 zu führen. In der hier beschriebenen Ausführungsform umfasst jedes Führungsmittel 17 zwei Führungswagen, die entlang der x-Achse am vorderen und hinteren Ende des Auflagebauteils 13 vorgesehen sind. In Fig. 1 sind lediglich die vorderen Führungswagen der Führungsmittel 17 der beiden Auflagebauteile 13 ersichtlich. An dem Träger 6 ist an seinen in y-Richtung entgegengesetzten Enden jeweils eine Kontaktfläche 29 vorgesehen, welche entsprechend der Auflagefläche 22 geneigt ist und über welche der Träger die Auflagefläche 22 kontaktiert. In der hier beschriebenen Ausführungsform ist die Kontaktfläche 29 die Unterseite eines Kontaktblechs 28, das mit dem Träger 6 verschweißt ist. Vorzugsweise weisen die Auflagefläche 22 und die Kontaktfläche 29 ausgesparte bzw. geöffnete Bereiche auf, wodurch eine Gewichtsreduktion erreicht wird. Die nicht gezeigte Antriebseinheit zum Verfahren der Brücke 5 in x-Richtung ist vorzugsweise in einem der Auflagebauteile 13 integriert.

Ein jeweiliges Ende des Trägers 8 ist unter anderem über Schraubverbindungen an der Auflagefläche 22 mit dem entsprechenden Auflagebauteil 13 verschraubt, wie weiter unten näher beschrieben wird. Darüber hinaus sind an jedem Ende des Trägers ein außenliegendes Stützelement 14 in der Form einer Platte und ein innenliegendes Stützelement 14' ebenfalls in der Form einer Platte vorgesehen. Das außenliegende Stützelement 14 ist mit dem entsprechenden Auflagebauteil 13 an seiner außenliegenden Seitenfläche 18 mittels Schrauben 16 verschraubt. Analog ist das innenliegende Stützelement 14' mit der innenliegenden Seitenfläche 18' des Auflagebauteils 13 über Schrauben 16 verschraubt. Aus Übersichtlichkeitsgründen sind nur einige der Schrauben in Fig. 1 und Fig. 2 mit dem Bezugszeichen 16 bezeichnet. Die außenliegenden Stützelemente 14 enthalten eine Öffnung 15, über welche Zugang zum Inneren des Trägers 6 ermöglicht wird, um den Träger mit der Auflagefläche 22 zu verschrauben. Im Betrieb der Laserbearbeitungsmaschine 1 sind die Öffnungen 15 mittels einer Abdeckung abgedeckt. Die Stützelemente 14 und 14' dienen zur Aufnahme von Kräften, die in Richtung senkrecht auf die Auflagefläche 22 wirken.

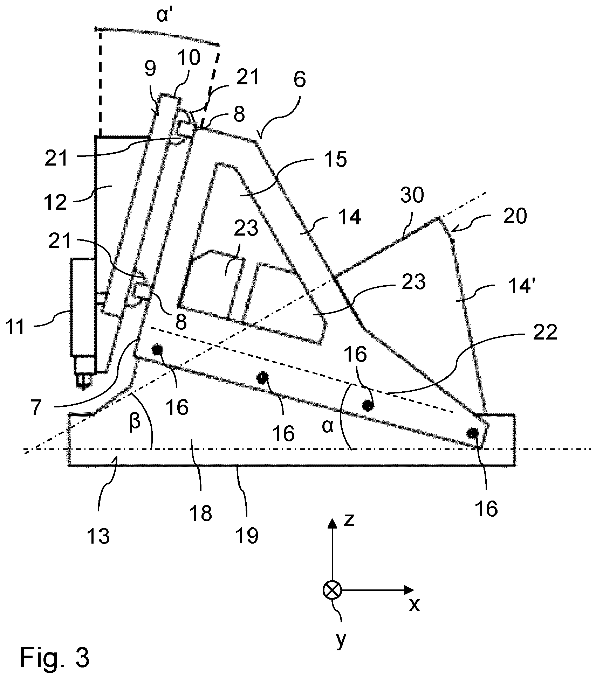

Fig. 2 zeigt die Laserbearbeitungsmaschine 1 aus Fig. 1 in perspektivischer Ansicht von hinten. Aus Fig. 2 wird die Rückseite 26 der Laserbearbeitungsmaschine ersichtlich. Wie man erkennt, ist an dieser Rückseite ein vorspringender Abschnitt 20 vorgesehen, an dessen Oberseite sich ein Führungsabschnitt 30 mit einer Führungsfläche befindet, die gegenüber der Horizontalen (d.h. der x-Achse) geneigt ist. Der Führungsabschnitt 30 dient zur Aufnahme einer Energiekette (nicht gezeigt), über welche Leitungen zur Energiezufuhr und Steuerung der Laserbearbeitungsmaschine und/oder ein Faserkabel zur Zufuhr von Laserlicht zur Laserbearbeitungseinheit geführt werden. Der vorspringende Abschnitt 20 ist an seinen Seiten durch die Stützelemente 14' begrenzt. Aus Fig. 2 wird ferner ersichtlich, dass die Laserbearbeitungseinheit 9 an ihrem oberen Ende über zwei Führungselemente 21 an der oberen Führungsschiene 8 geführt ist. Zwei weitere Führungselemente 21 (siehe Fig. 3) sind auch am unteren Ende der Laserbearbeitungseinheit 9 vorgesehen und greifen in die untere Führungsschiene 8 des Trägers 6 ein.

Fig. 3 zeigt eine Seitenansicht auf die Brücke 5 aus Fig. 1 und Fig. 2 entlang der y-Richtung des kartesischen Koordinatensystems. Dabei ist das Auflagebauteil 13 ersichtlich, das in Fig. 2 am linken Ende des Trägers 6 vorgesehen ist. Das Auflagebauteil am rechten Ende des Trägers ist analog aufgebaut. Aus Fig. 3 erkennt man den Neigungswinkel a, in dem die Auflagefläche 22 gegenüber der Horizontalen (d.h. der x-Achse) geneigt ist. Dieser Neigungswinkel α entspricht dem dargestellten Neigungswinkel a', in dem die Aufnahmeseite 7 gegenüber der Vertikalen (d.h. der z-Achse) geneigt ist, da die Aufnahmeseite 7 senkrecht zur Kontaktfläche 29 und zur Auflagefläche 22 verläuft. Der Neigungswinkel α liegt in der hier beschriebenen Ausführungsform bei 15°, kann jedoch auch andere Werte annehmen, solange sichergestellt ist, dass die Auflagefläche schräg nach unten verläuft, so dass der Schwerpunkt der Laserbearbeitungseinheit 9 in Bezug auf die Brücke 5 nach hinten verlagert wird. Andere Werte des Neigungswinkel α können im Bereich von 5° bis 35°, insbesondere im Bereich von 10° bis 30° liegen. Diese Werte gelten für den Neigungswinkel a' entsprechend.

Aus Fig. 3 erkennt man ferner, dass das innenliegende Stützelement 14' Öffnungen 23 aufweist, wodurch Gewicht eingespart wird. Darüber hinaus wird nochmals der Führungsabschnitt 30 ersichtlich, dessen Führungsfläche im dargestellten Winkel β gegenüber der Horizontalen (d.h. der x-Achse) geneigt ist. Entlang der Führungsfläche des Führungsabschnitts 30 wird die Energiekette geführt. Ferner werden aus Fig. 3 die unteren Führungselemente 21 am verfahrbaren Wagen 10 ersichtlich. Diese Führungselemente greifen in die untere Führungsschiene 8 auf der Aufnahmeseite 7 ein.

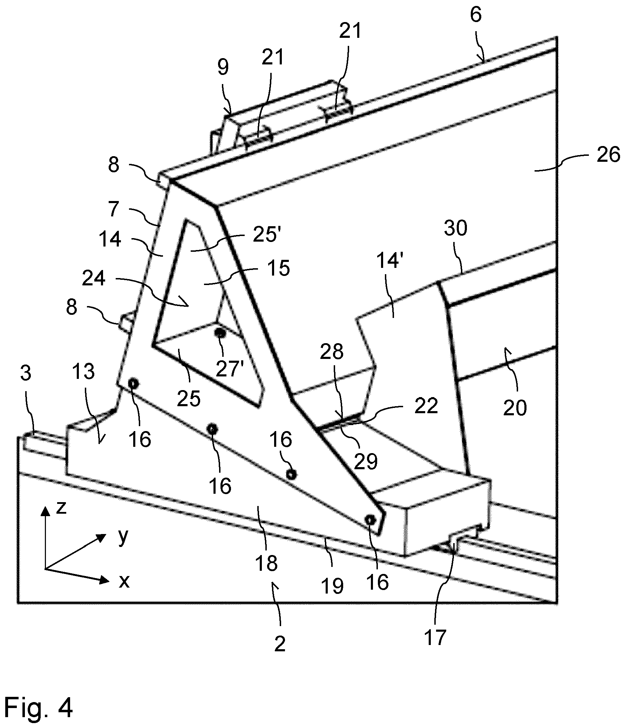

Fig. 4 zeigt eine perspektivische Detailansicht des linken Endes der Brücke 5 aus Fig. 2. Aus Fig. 4 wird ersichtlich, dass der Träger 6 ein rechtwinklig gebogenes Blech mit einem unteren Abschnitt 25 und einem oberen Abschnitt 25' umfasst. Der untere Abschnitt 25 läuft parallel zur Auflagefläche 22. Auf der Unterseite des unteren Abschnitts 25 ist das Kontaktblech 28 mit der entsprechenden Kontaktfläche 29 angeschweißt. Die Kontaktfläche 29 kontaktiert die Auflagefläche 22. An dem oberen Abschnitt 25' des gebogenen Blechs 24 befindet sich die Aufnahmeseite 7 des Trägers 6. Durch die rechtwinklige Anordnung der beiden Abschnitte 25 und 25' wird die mechanische Bearbeitung der Aufnahmeseite 7, die bei der Herstellung des Trägers 6 zur präzisen Ausrichtung der Laserbearbeitungseinheit 9 erforderlich ist, stark vereinfacht. Insbesondere können Bearbeitungsmaschinen ohne drehbare Achse für die mechanische Bearbeitung der Aufnahmeseite verwendet werden. Solche Bearbeitungsmaschinen haben deutlich geringere Betriebskosten als Bearbeitungsmaschinen mit drehbaren Achsen.

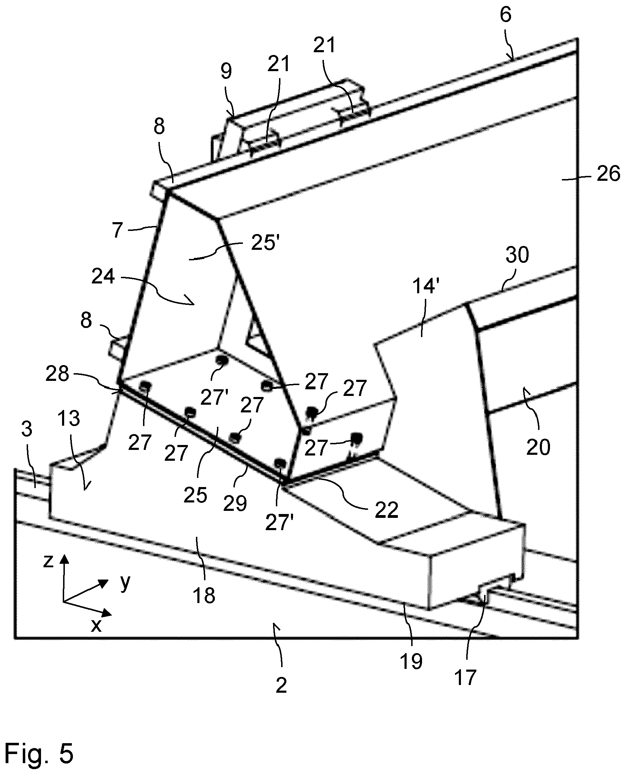

Aus Fig. 4 wird ferner eine Passschraube 27' ersichtlich, mit welcher der untere Abschnitt 25 des Blechs 24 an der Auflagefläche 22 befestigt wird. Insgesamt werden zur Verbindung des unteren Abschnitts 25' mit der Auflagefläche 22 acht Schrauben verwendet, wie aus der weiter unten beschriebenen Fig. 5 ersichtlich wird. Darüber hinaus erkennt man aus Fig. 4 den hinteren Führungswagen, der zusammen mit dem aus Fig. 1 und Fig. 2 ersichtlichen vorderen Führungswagen das Führungsmittel 17 zur Führung des entsprechenden Auflagebauteils 13 entlang der Führungsschiene 3 bildet.

Fig. 5 zeigt die gleiche Ansicht wie Fig. 4, wobei nunmehr jedoch das an dem Auflagebauteil 13 angeschraubte außenliegende Stützelement 14 weggelassen wurde. Wie man erkennt, ist der untere Abschnitt 25, an dessen Unterseite das Kontaktblech 28 angeschweißt ist, mit der Auflagefläche 22 über acht Schrauben in zwei Reihen verschraubt. Die Schrauben 27 sind herkömmliche Schrauben mit einem durchgehenden Gewindeschaft, wodurch eine kraftschlüssige Verbindung zwischen der Kontaktfläche 29 und der Auflagefläche 22 erreicht wird. Die beiden sowohl in y-Richtung als auch in x-Richtung versetzt zueinander angeordneten Passschrauben 27' haben demgegenüber die Funktion der exakten Ausrichtung des Trägers 6 in Bezug auf das Auflagebauteil 13. Hierfür haben die Passschrauben 27' in an sich bekannter Weise einen hochgenau gefertigten zylindrischen Schaftabschnitt. Mittels der Passschrauben wird primär ein Formschluss zwischen Kontaktfläche 29 und Auflagefläche 22 erreicht. Die Schrauben 27 und 27' sind über die Öffnung 15 innerhalb des außenliegenden Stützelements 14 (siehe Fig. 4) zugänglich.

Aus Fig. 5 wird ferner ersichtlich, dass sich zwischen dem oberen Abschnitt 25 und dem unteren Abschnitt 25' des Blechs 24 ein gebogener Blechmantel erstreckt, der die Rückseite 26 des Trägers 6 bildet. Durch diesen Mantel wird eine kompakte dreiecksförmige Form des Trägers erreicht.

Die im Vorangegangenen beschriebenen Ausführungsformen der Erfindung weisen eine Reihe von Vorteilen auf. Insbesondere wird eine modular aufgebaute Brücke aus zwei Auflagebauteilen und einem Träger bereitgestellt, wodurch die Herstellung der Brücke vereinfacht wird. Durch die Aufteilung in drei separate Teile wird die Anzahl der Bezüge pro Teil verringert und die Außenform des Trägers wird vereinfacht. Somit wird die Prozesssicherheit und die Fehlertoleranz bei der Herstellung der Brücke erhöht. Durch die schräg verlaufende Auflagefläche wird eine vorteilhafte Gewichtsverteilung dahingehend erreicht, dass der Schwerpunkt der Laserbearbeitungseinheit nach hinten zur Brücke verlagert wird. Gleichzeitig wird eine feste lösbare Verbindung zwischen dem Träger und den Auflagebauteilen über Schrauben sichergestellt.

Durch die senkrechte Ausrichtung der Aufnahmeseite in Bezug auf die Kontaktfläche und Auflagefläche wird die im Rahmen der Herstellung des Trägers erforderliche Bearbeitung der Aufnahmeseite vereinfacht, da weniger komplex aufgebaute Bearbeitungsmaschinen verwendet werden können. Darüber hinaus ermöglicht der Träger durch seinen vorspringenden Abschnitt eine kompakte Anordnung von Anbauteilen.

Ferner können an den Auflagebauteilen die Antriebseinheiten zur Bewegung der Brücke in x-Richtung angebracht sein. Beispielsweise kann zunächst von dem entsprechenden Auflagebauteil ein mechanisch unbearbeiteter Rohguss gefertigt werden, der sich für verschiedene Antriebskonzepte eignet. Erst durch die anschließende mechanische Bearbeitung kann das entsprechende Auflagebauteil für den zu verwendenden Antrieb konfiguriert werden. Des Weiteren eignen sich die Auflagebauteile aufgrund ihrer Größe als Kühlkörper für die Antriebseinheit.

### Bezugszeichenliste:

- 1: Laserbearbeitungsmaschine
- 2: Führungsträger
- 3: Führungsschienen
- 4: Auflagetisch
- 5: Brücke
- 6: Träger
- 7: Aufnahmeseite des Trägers
- 8: Führungsschienen
- 9: Laserbearbeitungseinheit
- 10: verfahrbarer Wagen
- 11: Bearbeitungskopf
- 12: Aktorik
- 13: Auflagebauteil
- 14, 14': Stützelemente (Platten)
- 15: Öffnung im Stützelement 14
- 16: Schrauben
- 17: Führungsmittel (Führungswagen)
- 18, 18': Seitenflächen des Auflagebauteils
- 19: von der Auflagefläche abgewandte Basis des Auflagebauteils (Unterseite)
- 20: vorstehender Abschnitt
- 21: Führungselement
- 22: Auflagefläche
- 23: Öffnungen im Stützelement 14'
- 24: gebogenes Blech
- 25: unterer Abschnitt des gebogenen Blechs
- 25': oberer Abschnitt des gebogenen Blechs
- 26: von der Aufnahmeseite abgewandte Seite des Trägers (Rückseite)
- 27: Schrauben mit einem durchgehenden Gewindeschaft
- 27': Passschrauben mit einem zylindrischen Schaftabschnitt
- 28: Kontaktblech
- 29: Kontaktfläche des Kontaktblechs
- 30: Führungsabschnitt des vorstehenden Abschnitts 20
- α: Neigungswinkel der Auflagefläche
- α': Neigungswinkel der Aufnahmeseite
- β: Winkel der Führungsfläche des Führungsabschnitts
- x, y, z: Achsen eines kartesischen Koordinatensystems

## Patentansprüche

1. Brücke für eine Laserbearbeitungsmaschine (1), insbesondere eine Laserschneidmaschine, wobei die Brücke (5) einen Träger (6) umfasst, der sich entlang einer ersten Achse (y) erstreckt und eine Aufnahmeseite (7) zum beweglichen Führen einer Laserbearbeitungseinheit (9) entlang der ersten Achse (y) aufweist, und wobei an der Brücke (5) ein oder mehrere Führungsmittel (17) zum beweglichen Führen der Brücke (5) entlang einer zweiten Achse (x), die im Wesentlichen senkrecht zur ersten Achse (y) verläuft, vorgesehen sind, wobei jedes Führungsmittel (17) in einem separaten Auflagebauteil (13) vorgesehen ist, das lösbar mit dem Träger (6) verbunden ist und eine Auflagefläche (22) aufweist, auf welcher der Träger (6) mit einer Kontaktfläche (29) aufliegt, wobei die Auflagefläche (22) senkrecht zu der Aufnahmeseite (7) verläuft und gegenüber der zweiten Achse (x) in einem Neigungswinkel (a) geneigt ist, so dass sich die Auflagefläche (22) mit zunehmendem Abstand von der Aufnahmeseite (7) der Brücke (5) einer Basis (19) des Auflagebauteils (13) annähert, welche von der Auflagefläche (22) abgewandt ist.

2. Brücke nach Anspruch 1, **dadurch gekennzeichnet, dass** der Neigungswinkel (a) einen Wert von 5° bis 35°, vorzugsweise von 10° bis 30° und besonders bevorzugt von 15° hat.

3. Brücke nach Anspruch 1 oder 2, **dadurch gekennzeichnet, dass** ein jeweiliges Auflagebauteil (13) zumindest an seiner Auflagefläche (22) lösbar mit dem Träger (6) verbunden ist.

4. Brücke nach einem der vorhergehenden Ansprüche, **dadurch gekennzeichnet, dass** die lösbare Verbindung eines jeweiligen Auflagebauteils (13) mit dem Träger (6) eine kraftschlüssige und/oder formschlüssige Verbindung ist, wobei die kraftschlüssige und/oder formschlüssige Verbindung vorzugsweise eine Verbindung über eine oder mehrere Schrauben (16, 27) umfasst.

5. Brücke nach einem der vorhergehenden Ansprüche, **dadurch gekennzeichnet, dass** die Auflagefläche (22) eines jeweiligen Auflagebauteils (13) und die Kontaktfläche (29) des Trägers (6) mittels einer oder mehrerer Schrauben (27, 27') lösbar miteinander verbunden sind, wobei sich die Schraube (27, 27') oder die Schrauben (27, 27') jeweils durch übereinander liegende Öffnungen in der Auflagefläche (22) und der Kontaktfläche (29) erstrecken und vorzugsweise im Auflagebauteil (13) verschraubt sind.

6. Brücke nach Anspruch 5, **dadurch gekennzeichnet, dass** die Schraube (27, 27') oder die Schrauben (27, 27') zumindest eine Schraube (27) mit einem durchgehenden Gewindeschaft zur kraftschlüssigen Verbindung von Auflagefläche (22) und Kontaktfläche (29) umfassen und/oder die Schraube (27, 27') oder Schrauben (27, 27') zumindest eine Passschraube (27') mit einem zylindrischen Schaftabschnitt zur Fixierung der Position des Trägers (6) relativ zu dem jeweiligen Auflagebauteil (13) umfassen.

7. Brücke nach Anspruch 6, **dadurch gekennzeichnet, dass** mehrere Passschrauben (27') vorgehsehen sind, wobei wenigstens zwei der mehreren Passschrauben (27') in Erstreckungsrichtung der ersten Achse (y) und/oder in Erstreckungsrichtung der zweiten Achse (x) versetzt zueinander angeordnet sind.

8. Brücke nach einem der vorhergehenden Ansprüche, **dadurch gekennzeichnet, dass** der Träger (6) für ein jeweiliges Auflagebauteil (13) ein oder mehrere Stützelemente (14, 14') aufweist, welche sich senkrecht zur ersten Achse (y) erstrecken, wobei ein jeweiliges Stützelement (14, 14') kraftschlüssig und/oder formschlüssig, vorzugsweise mittels einer oder mehrerer Schrauben (16), mit dem jeweiligen Auflagebauteil (13), vorzugsweise an einer sich senkrecht zur ersten Achse (y) erstreckenden Seitenfläche (18, 18') des Auflagebauteils (13), verbunden ist.

9. Brücke nach Anspruch 8, **dadurch gekennzeichnet, dass** für ein jeweiliges Auflagebauteil (13) zwei Stützelemente (14, 14') vorgesehen sind, die in Erstreckungsrichtung der ersten Achse (y) versetzt zueinander angeordnet sind, wobei das jeweilige Auflagebauteil (13) zwischen den beiden Stützelementen (14, 14') angeordnet ist.

10. Brücke nach einem der vorhergehenden Ansprüche, **dadurch gekennzeichnet, dass** an einer der Aufnahmeseite (7) abgewandten Seite (26) des Trägers (6) ein vorstehender Abschnitt (20) mit einem in Richtung der ersten Achse (y) verlaufenden Führungsabschnitt (30) zur Aufnahme von einer oder mehreren Versorgungskomponenten vorgesehen ist, insbesondere zur Aufnahme einer Energiekette.

11. Brücke nach Anspruch 10, **dadurch gekennzeichnet, dass** zumindest eine Führungsfläche des Führungsabschnitts (30) in einem Winkel (β), welcher einen Wert von 5° bis 35°, vorzugsweise von 10° bis 30° und besonders bevorzugt von 15° hat, gegenüber der zweiten Achse (x) geneigt ist.

12. Brücke nach Anspruch 11, **dadurch gekennzeichnet, dass** der Winkel (β) den gleichen Wert wie der Neigungswinkel (a) aufweist.

13. Brücke nach einem der vorhergehenden Ansprüche, **dadurch gekennzeichnet, dass** das Auflagebauteil (13) oder zumindest eines der Auflagebauteile (13) eine Aufnahme für eine Antriebseinheit zum Bewegen der Brücke (5) entlang der zweiten Achse (x) umfasst.

14. Laserbearbeitungsmaschine, insbesondere Laserschneidmaschine, mit einer Laserbearbeitungseinheit (9) und einer Brücke (5) nach einem der vorhergehenden Ansprüche.
